# EUROPEAN PATENT APPLICATION

(11) **EP 1 070 738 A1**
(43) Date of publication of application: **24.01.2001**
(21) Application number: 99114547.5
(22) Date of filing: 23.07.1999
(51) Int. Cl.: C08K 7/00, C08K 3/04

(54) **Thermally conductive organic material**

(71) Applicant: SANYO ELECTRIC Co., Ltd., Moriguchi-shi, Osaka (JP)
(72) Inventor: Kazuma, Yasuo, Oosato-gun Saitama-ken (JP)
(74) Representative: Glawe, Delfs, Moll & Partner

(57) **Abstract**

There is provided a thermally conductive organic material having not only an excellent thermal conductivity but also a largely increased tensile strength. The thermally conductive organic material is formed by adding a predetermined amount of a thermally conductive material in the form of flakes and/or in the form of powder and a predetermined amount of a thermally conductive material in the form of fibers to a matrix formed of an organic material.

## Description

### BACKGROUND OF THE INVENTION

### Field of the Invention

This invention relates to a thermally conductive organic material, such as a thermally conductive resin.

### Prior Art

Generally, in a conventional thermally conductive organic material, thermal conductivity is secured by adding thermally conductive metal powder, such as aluminum powder, copper powder or the like, or graphite in the form of powder or flakes to an organic material, such as a resin or the like.

In such a conventional thermally conductive organic material, additives are in the form of powder or flakes and large in particle size, so that when the mixing ratio of an additive to the organic material is increased to enhance the thermal conductivity of the organic material, the appearance of a molded article is much spoiled. As a result, the mixing ratio of the additive to the organic material is restricted, which permits only a limited thermal conductivity to be obtained. Further, the conventional thermally conductive organic material has a characteristic that when the mixing ratio of an additive is increased within the above limit, on one hand, a higher thermal conductivity is obtained, but on the other hand, the strength thereof is reduced. The conventional thermally conductive material thus obtained, for instance, is a so-called very fragile material which is hardly increased in tensile strength but abnormally reduced in elongation.

### SUMMARY OF THE INVENTION

It is an object of the invention to provide a thermally conductive organic material which has not only an excellent thermal conductivity but also a largely enhanced tensile strength.

To attain the above object, the present invention provides a thermally conductive organic material comprising a matrix of an organic material, a predetermined amount of a first thermally conductive material in a form of flakes and/or in a form of powder, and a predetermined amount of a second thermally conductive material in a form of fibers.

According to this thermally conductive organic material, in the matrix comprised of an organic material, heat is transferred not only between flakes or powder particles of the first thermally conductive material but also between flakes and/or powder particles of the first thermally conductive material and fibers of the second thermally conductive material which are brought into contact with each other for connection. As a result, it becomes possible to more efficiently effect heat transfer or conduction than in the conventional thermally conductive organic material having a thermally conductive material in the form of flakes or in the form of powder singly added to the matrix of the organic material. This enables the organic material according to the invention to secure an excellent thermal conductivity. Further, the second thermally conductive material in the form of fibers has a reinforcing function, which enables the organic material according to the invention to be enhanced in tensile strength.

Preferably, the first thermally conductive material is formed of graphite, and the second thermally conductive material is formed of carbon fibers.

According to this preferred embodiment, graphite, which is inexpensive and excellent in thermal conductivity, and carbon fibers, which are excellent in rigidity, reinforcing effect, and thermal conductivity, are added in combination to an organic material, whereby it is possible to form an inexpensive thermally conductive organic material enhanced both in thermal conductivity and tensile strength.

More preferably, the predetermined amount of the graphite is equal to or larger than 20 percent by weight, and the predetermined amount of the carbon fibers is equal to or larger than 10 percent by weight.

According to this preferred embodiment, graphite and carbon fibers are added to the matrix of the organic material in amounts (mixing ratios) equal to or larger than the above respective predetermined values, whereby the enhanced thermal conductivity and high tensile strength can be secured.

Preferably, the predetermined amount of the graphite is equal to or larger than 30 percent by weight, and the predetermined amount of the carbon fibers is equal to or larger than 15 percent by weight.

According to this preferred embodiment, the graphite and carbon fibers are added in further increased amounts, whereby the thermal conductivity and tensile strength of the resulting thermally conductive material can be further increased.

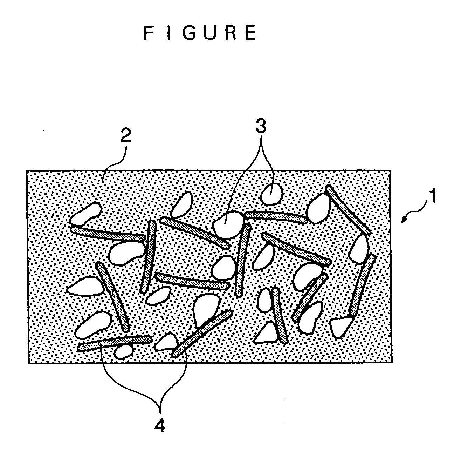

The above and other objects, features, and advantages of the invention will become more apparent from the following detailed description taken in conjunction with the accompanying drawing.

### BRIEF DESCRIPTION OF THE DRAWING

FIGURE is a diagram schematically showing the composition of a thermally conductive organic material according to the invention.

### DETAILED DESCRIPTION

The invention will now be described in detail with reference to the drawing showing a thermally conductive organic material according to an embodiment thereof. FIGURE is a schematic representation of the composition of the thermally conductive organic material according to the invention. As shown in the figure, the thermally conductive organic material 1 is formed by adding a predetermined amount of a thermally conductive material 3 in the form of flakes and a predetermined amount of a thermally conductive material 4 in the form of fibers added to a matrix 2 of an organic material.

The matrix 2 is comprised of an organic material, e.g. one selected from resins, such as thermoplastic resins, thermosetting resins and thermoplastic elastomers, and other organic materials, such as a vulcanized rubber and the like. Further, it is possible to employ the matrix 2 formed by a coated film, that is, the above thermally conductive materials 3 and 4 can be added to an organic coating composition to form a thermally conductive coating composition.

The thermally conductive material 3 is composed of graphite flakes, for instance. Or alternatively, the thermally conductive material 3 can also be composed of graphite powder or a metal powder having thermal conductivity, such as an aluminum powder, a copper powder, or the like, instead of the graphite flakes. It is also possible to compose the thermally conductive material 3 by combining graphite flakes and graphite powder. It is particularly preferable to employ graphite from the viewpoint of reduction of material costs.

The thermally conductive material 4 is composed of carbon fibers, glass fibers or the like. It is particularly preferable to use carbon fibers from the viewpoint of the rigidity and strength of the thermally conductive material 4.

The following TABLE 1 shows the thermal and strength characteristics of the thermally conductive organic materials 1 according to three Examples and various Comparative Examples. In each of the Examples and the Comparative Examples, Nylon-12 elastomer is used as a matrix 2 thereof. Further, in each Example, graphite flakes and carbon fibers (CF) are employed as the thermally conductive material 3 and the thermally conductive material 4, respectively, and added to the matrix 2. In Example 1 to Example 3, the amounts of graphite and carbon fibers added to the matrix 2 are 20 percent by weight and 10 percent by weight, 30 percent by weight and 15 percent by weight, and 40 percent by weight and 20 percent by weight, respectively.

Comparative Examples 1 and 2 correspond to conventional thermally conductive resins, and only graphite flakes are added to the matrix 2 in amounts of 20 percent by weight and 30 percent by weight in the respective Comparative Examples. Further, Comparative Examples 3 to 6 are provided for comparing changes in characteristics of thermally conductive organic materials caused by changes in additives added to the matrix 2. Comparative Examples 3 and 4 show the thermally conductive organic materials 1 formed by adding only carbon fibers to the matrix 2 in amounts of 20 percent by weight, and 30 percent by weight, respectively, while Comparative Example 5 shows the thermally conductive organic material 1 formed by adding only glass fibers (GF) to the matrix in an amount of 20 percent by weight. Comparative Example 6 shows the thermally conductive organic material 1 additive-free.

**TABLE**

| Samples | | Additive | Temperature (°C) | Density (kg/m³) | Specific heat (J/kgK) | Thermal diffusivity (×10⁻⁶m²/s) | Thermal conductivity (kcal/ mhr°C) | Tensile strength (Mpa) |
|---|---|---|---|---|---|---|---|---|
| Ex. | 1 | CF:10wt% graphite: 20wt% | 23°C | 1,180 | 1,600 | 0.255 | 0.41 | 47.8 |
| | 2 | CF:15wt% graphite: 30wt% | 23°C | 1,280 | 1,440 | 0.514 | 0.81 | 57.8 |
| | 3 | CF:20wt% graphite: 40wt% | 23°C | 1,410 | 1,240 | 1.26 | 1.88 | 59.7 |
| Com. Ex. | 1 | graphite: 20wt% | 23°C | - | - | - | 0.39 | 29.2 |
| | 2 | graphite: 30wt% | 23°C | - | - | - | 0.75 | 19.9 |
| | 3 | CF:20wt% | 23°C | - | - | - | 0.43 | - |
| | 4 | CF:30wt% | 23°C | - | - | - | 0.59 | - |
| | 5 | GF:20wt% | 23°C | - | - | - | 0.30 | - |
| | 6 | Additive-free | 23°C | 1,030 | - | - | 0.26 | 40.0 |

As shown in TABLE, first of all, the characteristics of Comparative Examples 1 or 2 corresponding to the conventional thermally conductive resins shown that the thermal conductivity is 0.39 kcal/mhr°C and the tensile strength is 29.2 Mpa, in the case of Comparative Example 1 having only the graphite added in the amount of 20 percent by weight, while in the case of Comparative Example 2 having the graphite increased up to 30 percent by weight, the thermal conductivity is 0.75 kcal/mhr°C and the tensile strength is 19.9 Mpa. That is, in Comparative Example 2, the thermal conductivity is increased, whereas the tensile strength is remarkably reduced.

On the other hand, Example 1 having 20 percent by weight of graphite and 10 percent by weight of carbon fibers added thereto has a thermal conductivity of 0.41 kcal/mhr°C and a tensile strength of 47.8 Mpa. This shows that Example 1 has the same thermal conductivity as that of the Comparative Example 1, and at the same time the tensile strength of Example 1 shows a leap upward caused by reinforcement effects of the carbon fibers.

Further, in Example 2 having graphite and carbon fibers increased in amount (mixing ratio) up to 30 percent by weight and 15 percent by weight, respectively, the thermally conductive organic material 1 has a thermal conductivity of 0.81 kcal/mhr°C and a tensile strength of 57.8 Mpa. That is, Example 2 has a thermal conductivity approximately twice as large as that of Example 1 to show that the thermal conductivity is remarkably improved, and the tensile strength is further enhanced in the case of Example 2. This is because heat transfer is effected not only between flakes of the graphite but also between the graphite flakes and the carbon fibers through connection between the flakes and fibers, thereby enhancing the total heat transfer efficiency of Example 2.

Further, Example 3 having graphite flakes and carbon fibers further increased in mixing ratio up to 40 percent by weight and 20 percent by weight, respectively has a thermal conductivity of 1.88 kcal/mhr°C and a tensile strength of 59.7 Mpa. That is, it is shown that Example 3 has a thermal conductivity more than twice that of Example 2, showing a further leap upward in thermal conductivity, with tensile strength made even higher to some extent.

As described above, according to the Examples of the thermally conductive organic material 1 of the present embodiment, graphite flakes as the thermally conductive material 3 and carbon fibers as the thermally conductive material 4 are added in combination to the matrix 2 comprised of an organic material, so that heat transfer is effected not only between flakes of the graphite but also between the graphite flakes and the carbon fibers through connection between the flakes and fibers, whereby it is possible to secure an excellent thermal conductivity of the thermally conductive organic materials 1, and at the same time largely increase the tensile strength through the reinforcement by the carbon fibers.

The invention is not necessarily limited to Examples described above, but can be carried out or put into practice in various ways. For instance, materials other than the above-mentioned ones can be adopted as the matrix 2 and the thermally conductive resins 3 and 4, so long as they do not depart from the scope of the invention. Of course, it is possible to employ values of the amounts of the thermally conductive resins 3 and 4 added to the matrix 2 other than those used in the Examples.

It is further understood by those skilled in the art that the foregoing is a preferred embodiment of the invention, and that various changes and modifications may be made without departing from the spirit and scope thereof.

## Claims

1. A thermally conductive organic material comprising a matrix of an organic material, a predetermined amount of a first thermally conductive material in a form of flakes and/or in a form of powder, and a predetermined amount of a second thermally conductive material in a form of fibers.

2. A thermally conductive organic material according to claim 1, wherein said first thermally conductive material is formed of graphite, and wherein said second thermally conductive material is formed of carbon fibers.

3. A thermally conductive organic material according to claim 2, wherein said predetermined amount of said graphite is equal to or larger than 20 percent by weight, and wherein said predetermined amount of said carbon fibers is equal to or larger than 10 percent by weight.

4. A thermally conductive organic material according to claim 3, wherein said predetermined amount of said graphite is equal to or larger than 30 percent by weight, and wherein said predetermined amount of said carbon fibers is equal to or larger than 15 percent by weight.
